# EUROPEAN PATENT APPLICATION

(11) **EP 4 632 741 A1**
(43) Date of publication of application: **15.10.2025**
(21) Application number: 25169113.5
(22) Date of filing: 08.04.2025
(51) Int. Cl.: G11B 27/031, G11B 27/32, H04N 21/854

(54) **READING AND/OR WRITING MEDIA FILES**

(30) Priority: 08.04.2024 AU 2024900974
(71) Applicant: Blackmagic Design Pty Ltd, South Melbourne, Victoria 3205 (AU)
(72) Inventor: HAMMERTON, David, South Melbourne, 3205 (AU); CLARKE, Doug, South Melbourne, 3205 (AU)
(74) Representative: Mathys & Squire

(57) **Abstract**

There is disclosed a method of writing a media file. The method comprises writing a media file which include, a file header, a file body for containing media elements, a descriptor portion enabling reading of the media elements in the body portion. Further, the file header includes data enabling the location of the file's descriptor portion to be determined. Also disclosed herein is a method of reading a media file stored on a data storage media. There is also disclosed a method of live recording of media.

## Description

### Field

The present disclosure relates to media files, and more particularly to methods and systems for reading and/or writing media files.

### Background

Many media handing devices and software write audio and/or video and ancillary data to a storage medium (e.g., disks, network storage and the like) using files having container formats, such as QuickTime, MP4 and other container formats based on the ISO base media file format (ISOBMFF). The ISO base media file format is published by ISO as part 12 of the MPEG-4 specifications, ISO/IEC 14496-12, however, it is also used by standards and formats other than MPEG-4.

Using such file formats in live recording, or other situations that require creation of files of unknown length, may present difficulties. Moreover, reading such files, especially with low latency, while the live recording is still underway, can be particularly problematic as the entire file structure may be incomplete preventing reading.

The systems, devices, methods, and approaches described in this section, and components thereof are known to the inventors. Therefore, unless otherwise indicated, it should not be assumed that any of such systems, devices, methods, approaches, or their components described are citable as prior art merely by virtue of their inclusion in this section, or that such systems, devices, methods, approaches, and components would ordinarily be known to a person of ordinary skill in the art.

### Summary

Aspects and embodiments of the present invention are set out in the appended claims. These and other aspects and embodiments of the invention are also described herein.

There is disclosed a method of writing a media file. The method comprises writing a media file which include, a file header, a file body for containing media elements, a descriptor portion enabling reading of the media elements in the body portion. Further, the file header includes data enabling the location of the file's descriptor portion to be determined. Also disclosed herein is a method of reading a media file stored on a data storage media. There is also disclosed a method of live recording of media.

Methods of writing a media file and methods of reading a media file are described. The methods may have application to continuous writing of data to a file. The file format may, for example, be based on, or similar to, ISOBMFF files (e.g., in live recording situations where the length of the file will not be known). The methods of writing include writing to a descriptor file in addition to the media file, the descriptor file containing data enabling reading of media elements stored in the file body of said media file. The writing to the descriptor file may precede the writing of corresponding data enabling reading of media elements stored in the file body to the media file. The reading of the media file may include utilising the data enabling reading of media elements stored in the file body that is in the descriptor file. The reading of the media file may be performed before the writing of the media file has been completed, for example before the writing of the live recording to the media file has ended.

In a first aspect, the present disclosure relates to a method of writing a media file, comprising: (a) writing a media file including: a file header; a file body for containing media elements; a descriptor portion enabling reading of the media elements in the body portion; wherein the file header includes data enabling the location of the file's descriptor portion to be determined; (b) writing at least one media element to the file body; and (c) writing a descriptor file associated with the media file, said descriptor file containing data enabling reading of media elements stored in the file body of said media file.

In some embodiments, the method of the first aspect further includes repeating (b) to write additional media elements to said file body.

In some embodiments, the method of the first aspect further includes repeating (c) to write additional data into said descriptor file enabling reading of the additional media elements stored in the file body of said media file.

In a second aspect, the present disclosure relates to a method of writing a media file, the media file comprising: a file header; a file body for containing media elements; a descriptor portion enabling reading of the media elements in the body portion; wherein the file header includes data enabling the location of the file's descriptor portion to be determined; the method comprising: (a) writing the media file; (b) writing at least one media element to the file body; (c) writing a descriptor file associated with the media file, said descriptor file containing data enabling reading of media elements stored in the file body of said media file; (d) repeating (b) to write additional media elements to said file body; and (e) repeating (c) to write additional data into said descriptor file enabling reading of the additional media elements stored in the file body; and (f) once all additional media elements are written to said file body, writing a descriptor portion to said media file, enabling reading of media elements in the body portion.

In some embodiments, the method of the second aspect further includes: updating the file header to provide an updated indication of a location of the descriptor portion within the file.

In some embodiments, the method of the first aspect or the second aspect further includes repeating (c) to write additional data into said descriptor file enabling reading of the additional media elements stored in the file body of said media file; and wherein (c) is repeated after each additional media element is written to said file body.

In some embodiments, the method of the first aspect or the second aspect further includes repeating (c) to write additional data into said descriptor file enabling reading of the additional media elements stored in the file body of said media file; and wherein (c) is repeated periodically.

In some embodiments, the method of the first aspect or the second aspect further includes repeating (c) to write additional data into said descriptor file enabling reading of the additional media elements stored in the file body of said media file; and wherein (c) is repeated on an ad hoc basis.

In some embodiments, the method of the first aspect or the second aspect further includes:
modifying the descriptor portion of the media file to enable reading of all media elements in the body portion; and
updating the file header to provide an updated indication of a location of the descriptor portion within the file.

In some embodiments, the method of the first aspect or the second aspect further includes repeating (c) to write additional data into said descriptor file enabling reading of the additional media elements stored in the file body of said media file; and wherein repeating (c) includes writing a said additional data enabling reading in a data new fragment that enables playback of media elements stored in the file body of said media file since the last occurrence of (c).

In some embodiments, the method of the first aspect or the second aspect further includes finalising the media file by writing a final descriptor portion in the media file.

In some embodiments, the method of the first aspect or the second aspect further includes deleting the descriptor file.

In a third aspect, the present disclosure relates to a method of reading a media file stored on a data storage media, said media file comprising: a file header; a file body containing media elements; and a descriptor portion enabling reading of media elements in the body portion; wherein the file header includes an indication of a location of the descriptor portion within the file; said method including: (x) Reading a descriptor file associated with the media file, said descriptor file containing data enabling reading of media elements stored in the file body of said media file; and (y) Reading said media elements from said file body according to said descriptor file.

In a fourth aspect, the present disclosure relates to a method of reading a media file stored on a data storage media, said media file comprising: a file header; a file body containing media elements; and a descriptor portion enabling reading of media elements in the body portion; wherein the file header includes an indication of a location of the descriptor portion within the file; said method including: checking for the presence of a descriptor file associated with the media file, said descriptor file being configured to store data enabling reading of media elements stored in the file body of said media file; and in the event said descriptor file exists and includes data enabling reading of media elements: (x) reading a descriptor file associated with the media file, said descriptor file containing data enabling reading of media elements stored in the file body of said media file; and (y) reading said media elements from said file body according to said descriptor file.

In some embodiments, the method of the third aspect or the fourth aspect further includes repeating (x) to obtain additional data enabling reading of media elements stored in the file body of said media file.

In some embodiments, the method of the third aspect or the fourth aspect further includes the data enabling reading being written in the descriptor file in sequentially stored fragments, wherein each fragment enables playback of media elements stored in the file body stored since the previous fragment was stored in the descriptor file.

In some embodiments, the method of the third aspect or the fourth aspect further includes repeating (x) to obtain additional data enabling reading of media elements stored in the file body of said media file; and wherein repeating (x) further includes reading one or more fragments that were stored in the descriptor file since (x) was last repeated.

In some embodiments, the method of the third aspect or the fourth aspect further includes detecting a change in the descriptor file, and in response to said detection repeating (x).

In some embodiments, the method of the third aspect or the fourth aspect, further includes detecting a change in the descriptor file comprising any one of:
receiving a notification indicating that said descriptor file has been changed; or
checking for a change in said descriptor file.

In some embodiments, the method of the third aspect or the fourth aspect further includes repeating (y) to read additional media elements from said file body according to said additional data enabling reading.

In some embodiments, the method of the third aspect or the fourth aspect, in the event that either:
said descriptor file associated with the media file does not exist; or
said descriptor file associated with the media file does not include data enabling reading of media elements, said method includes:
   (x2) reading the descriptor portion of the media file enabling reading of media elements in the body portion; and
   (y2) reading said media elements from said file body according to said descriptor portion of the media file.
In a fifth aspect, the present disclosure relates to a method of reproducing a media file via a storage medium, said method, comprising:
writing a media file to the storage medium using a method of any one of the first aspect or the second aspects; and
reading a media file from the storage medium using a method of any one of the third aspect or the fourth aspects.

In a sixth aspect, the present disclosure relates to a method of live recording of media, the media comprising a plurality of media elements of audio, video, or audio and video, the method comprising:
creating a media file for the media, the media file comprising a file header and a file body;
during live recording by a media source: a) receiving from the media source at least one media element of the plurality of media elements; b) writing the at least one media element into the file body; and c) writing data enabling reading of the at least one media element to a descriptor file associated with the media file; and
once all of the plurality of media elements have been received, finalising the media file, including writing or updating a descriptor portion of the media file;
wherein the file header includes data enabling the location of the descriptor portion of the media file to be determined and the descriptor portion comprises data enabling reading of the media elements in the body portion.

In some embodiments, the sixth aspect further includes the created media file including a descriptor portion.

In some embodiments, the sixth aspect further includes the created media file not including a descriptor portion and finalising the media file comprises adding the descriptor portion to the media file.

In some embodiments, the sixth aspect further includes updating the descriptor file at least once a second during the live recording, based on media elements of the plurality of media elements received and written to the file body since the last update.

In some embodiments, the sixth aspect further includes reading the media file during the live recording or prior to the finalising of the media file, wherein reading the media file comprises reading media elements in the file body according to the descriptor file.

In a seventh aspect, the present disclosure relates to a computer readable medium storing instructions that, when executed by a computer processor, cause the computer processor to perform the method of any of the first, second, third, fourth, fifth or sixth aspects.

While the invention(s) disclosed herein are amenable to various modifications and alternative forms, specific embodiments are shown by way of example in the drawings and are described in detail. It should be understood, however, that the drawings and detailed description are not intended to limit the invention(s) to the particular form disclosed. Furthermore, all alternative combinations of two or more of the individual features mentioned or evident from the text or drawings comprise additional aspects or inventive disclosures, which may form the subject of claims.

The disclosure also provides computer programs and computer program products comprising software code adapted, when executed on a data processing apparatus, to perform any of the methods and/or for embodying any of the apparatus and system features described herein, including any or all of the component steps of any method.

The disclosure also provides a computer or computing system (including networked or distributed systems) having an operating system which supports a computer program for carrying out any of the methods described herein and/or for embodying any of the apparatus or system features described herein.

The disclosure also provides a computer readable media having stored thereon any one or more of the computer programs aforesaid.

The disclosure extends to methods, system and apparatus substantially as herein described and/or as illustrated with reference to the accompanying figures.

The disclosure also provides a signal embodying a computer program or a computer program product for carrying out any of the methods described herein, and/or for embodying any of the apparatus features described herein, a method of transmitting such a signal, and a computer product having an operating system which supports a computer program for carrying out the methods described herein and/or for embodying any of the apparatus features described herein.

Any feature in one aspect of the disclosure may be applied to other aspects of the invention, in any appropriate combination. In particular, method aspects may be applied to apparatus aspects, and vice versa. As used herein, means plus function features may be expressed alternatively in terms of their corresponding structure, such as a suitably programmed processor and associated memory.

Furthermore, features implanted in hardware may generally be implemented in software, and vice versa. Any reference to software and hardware features herein should be construed accordingly.

It should also be appreciated that particular combinations of the various features described and defined in any aspects of the disclosure can be implemented and/or supplied and/or used independently.

### Brief description of the Drawings

Figure 1 is a schematic diagram of an update process for a container file format.
Figure 2 illustrates a system for implementing a process according to the present disclosure.
Figure 3 is a schematic diagram of a file writing process according to a first embodiment.
Figure 4 is a flowchart illustrating a file writing process according to a first embodiment.
Figure 5 is a schematic diagram of a file writing process according to another embodiment.
Figure 6 is a flowchart illustrating a file writing process according to another embodiment.
Figure 7 is a flowchart illustrating a file writing process according to another embodiment.
Figure 8 is a block diagram illustrating a device for implementing methods according to an embodiment of the present disclosure.

### Detailed description

In the following description numerous specific details are set forth in order to provide a thorough understanding of the present invention. It will be apparent, however, that the present invention may be practiced without these specific details. In some instances, well-known structures and devices are shown in block diagram form in order to avoid unnecessary obfuscation of salient details.

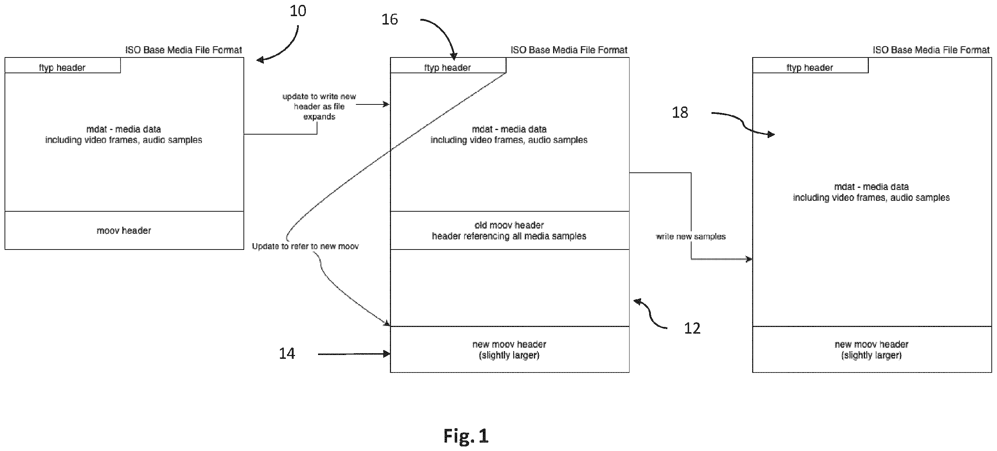

To enable continuous writing of data recorded in file formats based on, or similar to, ISOBMFF files (e.g., in live recording situations where the length of the file will not be known) the applicant has developed mechanisms to grow files as recording continues. One such example used with ISOBFF files allows a file to be continually written by "atomically" growing the file at regular intervals. Figure 1 schematically illustrates this process as follows:

The process begins with an original ISOBFF file (10) that contains a file header (labelled "ftyp header"), body containing media data (such as video frames, audio sample etc.), and a "moov" header.

Writing the file beyond its original expected size involves:
a) Expanding the file so new media data can be contained (12);
b) write a new "moov" header at the end of the file (14); and
c) update the file header to allow the new moov header (16) to be located.

New media data can then be added to the media data (18) as the recording continues with regular updates to the moov header as needed. The adding of new media data may involve discarding the old moov header by, e.g., overwriting the section dedicated to the old moov header with data associated to new media.

This mechanism also allows consumers (i.e., readers) of the file such as video editing software, video players, etc. to read a valid version of the file at all times, and also observe changes (i.e., new video and audio data).

However, a problem with this mechanism is that the updates tend to be relatively infrequent to minimise resource (e.g., network and storage bandwidth, CPU overhead) usage. This means that updating the "moov" header may only happen on the order of every 5 seconds. This infrequent updating may have a number of possible disadvantages, such as:
- If a recording is terminated due to a fault (e.g., software crash, network failure), the moov header may not be updated as required and, therefore, it may not be possible to locate the most recently written media resulting in such media to be lost.
- There is inherit latency of at least 5 seconds in the system from the time the video or audio data was written to disk to the time a consumer of the file can see it.

The present inventors have thus developed an approach to reading and writing files in such instances that may address one or both of these situation. This approach generally involves the use of a descriptor file which may augment or replace the role of a media file's conventional internal descriptor portions (i.e., moov header) which enables reading of media elements stored in the body portion of the media file.

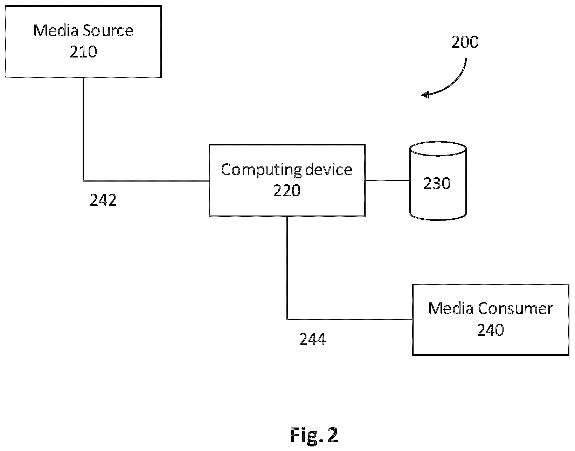

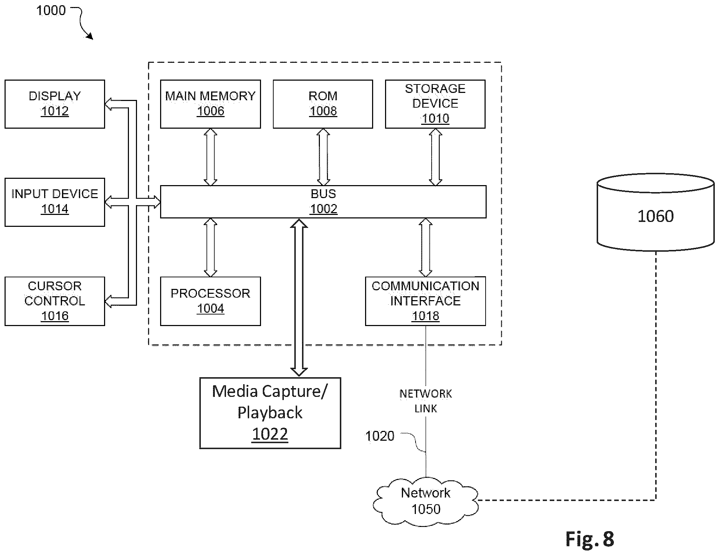

Figure 2 illustrates a system 200 that is adapted to read and write media files, preferably with low latency or substantially simultaneously. The system comprises a computing device 220 which is adapted to perform a method as set out in the present disclosure enabled by either software instructions or hardware processing that causes the device to perform the method steps set out herein. It may comprise a computing device 1000 as described below in connection with figure 8. The computing device may comprise or be connected to a data storage medium 230. The data storage medium may comprise local or network storage to which data may be written or read by the computing device 230. The computing device 220 and data storage system 230 may be part of a single system such as a personal computer, laptop, or the like, running one or more software applications (e.g., Davinci Resolve, or other media editing or viewing application) or a media processing appliance such as Blackmagic Hyperdeck, Ultrastudio made by the Blackmagic Design Pty Ltd, or a combination of such hardware and software devices. In the alternative, the data storage system may be separate to the computing device, such as a Blackmagic Cloudstore, Cloud Dock, or connected through devices such as Blackmagic Cloudpod.

The computing device 230 is connected, via a wired or wireless communications channel to a media source 210 and a media consumer 240. The media source 210 may be any device capable of outputting a media stream to the computing device for storing the media file. Typically, the media source 210 may be a camera, scanner, microphone, animation rendering processor, video editing system, media playback device, or network delivery system for media. The media consumer 240 may be any device that accepts a media stream via data or network connection. Typically, the media consumer may be a media broadcast system, media playback system or device, screen, monitor or projector, or downstream storage or processing device for media. The media source 210 and media consumer 240 are connected to the computing device 220 via respective communications links 242 and 244. The media source 210 and media consumer 240 may be connected via one or more media capture and/or playback components (e.g., 1022 in figure 8). The system illustrated in figure 2 is highly simplified and may include intervening devices between the elements illustrated, such as format converter, modems, routers, or the like, but these are omitted for brevity and so as not obscure the salient details of the disclosure.

For the sake of illustration only, assume the media source 210 is a camera, and the media consumer 240 is an element of a live media broadcast system. The respective communications links 242 and 244 may be Serial Digital Interface (SDI) links. Media generated at the camera 210 is transmitted via SDI link 242 to the computing device 220 for storage on the storage medium 230. The media consumer is adapted to access media on the storage medium 230 for display, use, or transmission. In particular, the consumption of the media by the media consumer 240 would ideally be in near real time from when it is received at the computing device, e.g., it is part of a live video feed or live display at an event.

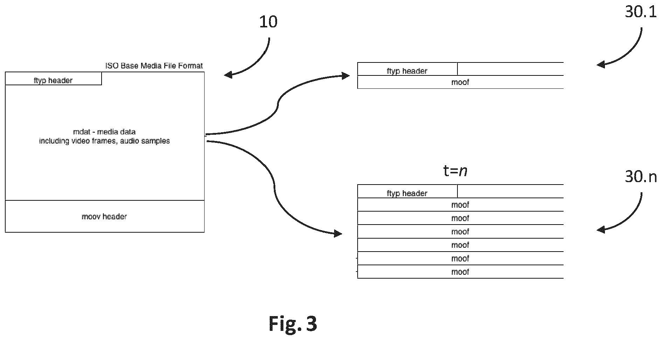

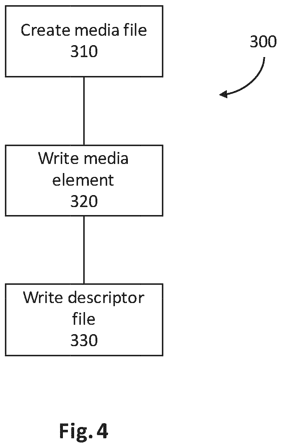

Figure 3 is a schematic representation of a media file and a descriptor file used in one embodiment of the present disclosure. The creation of use of these files will be described with the aid of the flowchart of figure 4.

The file 10 is a conventional media file as illustrated in figure 1. Upon commencement of writing of a media to a storage device, the media file 10 is created (310 in figure 4). The media file 10 has a data structure including:
- A file header (e.g., ftyp header). This typically includes file metadata and also information to enable the determination of the location of the file's descriptor portion.
- A file body portion that is used to contain media elements (e.g., mdat). The media elements may be but are not limited to, image frames if the media is a video, still image or the like, audio samples or other sound file objects, if the media file includes audio.
- A descriptor portion (e.g., a header or media index or the like, such as a "moov" header), which enables playback of the media elements in the body portion by telling the media player/consumer what media data is stored in the file body portion. In one form, the data that enables playback of the media elements in the body portion represents a mapping of a media element in a sequence of media element (e.g., frame n, or audio sample m) to a location of data representing that media element within in the file body portion. It may also include one or more additional metadata elements such as: metadata setting up codec parameters for decode, determining the pixel format, audio sampling, colour space information, frame duration, or in some formats a presentation order or decode order for media elements.

As media is received, at least one media element is written into the file body (320). A descriptor file (30.1) associated with the media file is also created (330). This may be performed when the media file is created or after reception and storage of at least one media data element in the body of the media file. The descriptor file contains data enabling reading of media elements stored in the file body of said media file. This data will typically be similar to that stored in the descriptor portion of the media file. In one embodiment, the data enabling reading of media elements stored in the descriptor file may be a moof header element as defined for an ISOBOFF(Fragmented) format file.

Additional media elements can be added to the media file as they are received from the media source. Additional data enabling reading of media elements can also be written to the descriptor file. This may be performed by adding additional moof header elements to the descriptor file that provides playback information to enable reading of the newly written media data in the media file's body. Over time (e.g. at time t=n) the descriptor file will expand as illustrated schematically at 30.n.

The writing of the additional data enabling reading in the descriptor file may be performed as desired. In some embodiments, it will be performed after each additional media element is written to said file body. In other embodiments, additional data will be written periodically. In this case it effectively becomes a batch process that updates the descriptor file to include data enabling reading of all media since the descriptor file was last updated. The updating period may be on the order of one or more seconds, but preferably is less than a second. In some embodiments, updating of the descriptor file is performed at least every half second while the media is being received and written to the media file. In some embodiments, updating of the descriptor file is performed at least every 300 milliseconds while the media is being received and written to the media file. In some embodiments, updating of the descriptor file is performed at least every 250 milliseconds, or at least every 200milliseconds while the media is being received and written to the media file.

In some embodiments, new data enabling reading is added to the descriptor file on an ad hoc basis. This may be convenient, e.g., if data processing and access to the data storage device are being prioritised for other purposes.

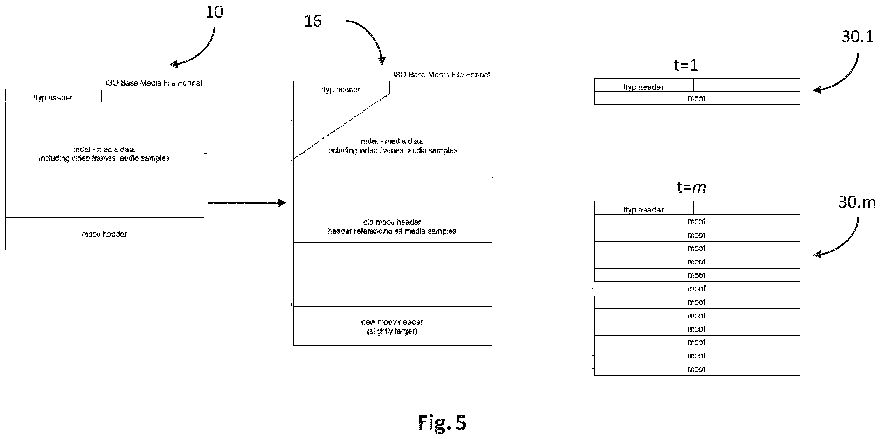

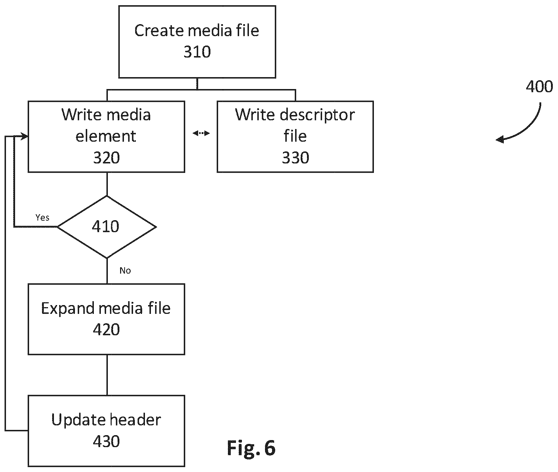

As noted in relation to figure 1, over time as further media elements are written to the body portion of the media file, it may be necessary to expand the size of the file. This may be performed as described in relation to figures 5 and the flowchart of figure 6. The original file 10, as described above, can have media elements added to it and its associated descriptor file updated periodically to enable the media elements to be read. However, at some point, no further media elements will fit within the defined file size. This can be addressed as set out in figure 6. Upon the writing of a media element or the reception of one or more new media elements for writing to the file body, a check is made at 410 whether the additional media element(s) will fit in the file body. If the new media element(s) will not fit, the media file is expanded 420. This may involve:
- updating the file size (e.g., by specifying a new file size with an **ftruncate** function); and
- writing a new descriptor portion (e.g., moov header) of the media file.

The new descriptor portion may be written at the end of the enlarged file and can be updated to describe all of the current media elements within the body of the media file to enable reading of all of the media elements in the body portion.

Next at 430, file header is updated to indicate the new location of the descriptor portion within the file.

Once the file is expanded the process of writing to the media file can continue by adding new media elements to the file body and writing new entries in the descriptor file 30 (as shown in 30.m by, e.g., moof fragments). As noted above, every now and then the descriptor portion of the media file can also be updated.

In some embodiments the descriptor file may be continually expanded throughout the whole writing portion by addition of new entries to describe the most recently added media elements written to the body of the media file. But variations are also possible. For example, in some embodiments the entries in the descriptor file will be expunged after each update of the descriptor portion of the media file, so that the descriptor file does not contain redundant information. As media elements are then added to the media file body (since the last update of the descriptor portion of the media file) entries in the descriptor file can be added to enable reading of the newly added media elements. In other embodiments, entries in the descriptor file may be accumulated until the media file needs to be grown, and only when the new descriptor portion of the media file is written as part of the file expansion process are the contents of the descriptor file deleted.

At the end of recording, once all media elements have been received, the media file is finalised, and a final descriptor portion of the media file is written that describes the entire set of media elements to be written to the body of the media file.

At this point, the descriptor file may be deleted or otherwise dissociated from the media file. At this point, the media file has its own full description of its contents and can be read as a standalone entity without use of the descriptor file.

An alternative embodiment of the method described above can also be performed. This alternative embodiment leaves out the step of writing a descriptor portion in the media file until all media elements to be stored within it are written. In this case the need for updating the descriptor portion as the file grows is avoided. Initially a media file is written that comprises: A file header; and a file body for containing media elements. An associated descriptor file is also created. Media files can be written to the file body as needed, and new descriptor fragments written to the descriptor file. The scheme and or frequency of updating the descriptor file can be as per the previous embodiments.

Once all of the desired media files are written to said file body, the media file can be finalised. This is performed by adding a descriptor portion to the file and performing a final update on the file header to enable the location of the descriptor portion to be determined.

At this point, the descriptor file may be deleted or otherwise dissociated from the media file. At this point, the media file has its own full description of its contents and can be read as a standalone entity without use of the descriptor file.

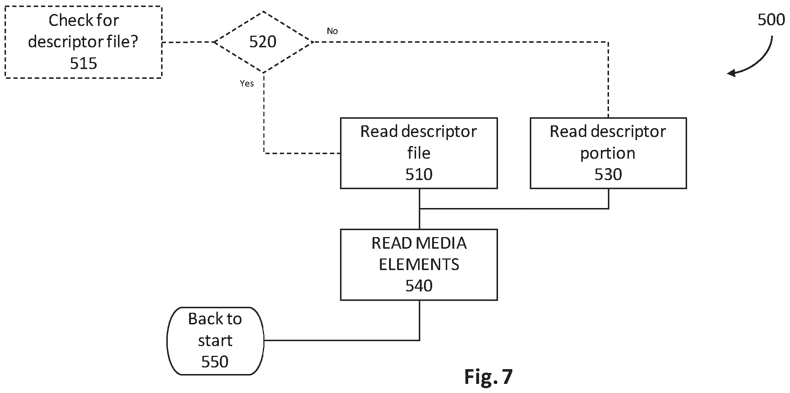

Reading a media file that is written in accordance with any of the embodiments of the present disclosure (e.g., for playback, transmission, to allow further processing or the like) can be performed as set out in figure 7. Reading according to a simple embodiment of the present disclosure involves reading the descriptor file 510 to obtain data enabling reading of media elements stored in the file body of said media file; then reading at 540 the media elements from the media file according to the descriptor file. This process can continue by returning 550 to the beginning of the process (e.g., 510) and repeating it as more data is to be read from the media file, or as the descriptor file is updated to describe additional media elements that have been written to the media file since it was last read.

In some embodiments there may be a precursor process, either once at the beginning of a read process or repeatedly as a read process continues, in which a check 515 and 520 is performed to determine if a descriptor file has been written for the media file and, if it has, whether there is any data enabling reading of media elements stored within it.

If at 520 the descriptor file is not present or it is empty, the read may begin by reading the descriptor portion of the media file 530 and the media elements are read 540 as per the descriptor portion of the media file. This may indicate that the media file has been finalised and the descriptor file no longer exists, or that the media file has just been created and has no contents. In some embodiments, it may also indicate that the descriptor portion of the media file has just been updated to reflect the current write state of the media file's body and the descriptor file's contents have been cleared.

If the media file has not been finalised and the writing scheme being used does not write a descriptor portion of the media file (e.g., the alternative embodiment set out above), step 530 is omitted until after finalisation of the media file.

Because the media file may be being concurrently written as it is being read, repeated cycle(s) of reading the descriptor file (and optionally the descriptor portion of the media file, if necessary) and accessing newly available data enabling reading of corresponding newly written media elements stored within the body of the media file may be necessary.

In some embodiments the descriptor file is written sequentially and its data stored in sequential fragments. In this case, only the new fragments need to be read to enable reading of the corresponding new media elements in the media file's body.

During concurrent reading and writing, the reader can determine that there is more media elements to access in one of several ways. In some embodiments, a file system notification may be sent to the reader when the descriptor file is changed. In other embodiments, the reader may use a polling process to check for changes in the descriptor file, and in the event of a change read the new fragment of the descriptor file so reading can continue.

Embodiments of the reading and writing methods described herein can be used together to enable concurrent writing and reading of media files with latency less than a few seconds. In this regard, each time the descriptor file associated with the media file is updated during the writing process (e.g., by adding a new fragment of descriptor data to the descriptor file), it becomes possible to read the media elements describe by that new descriptor. Therefore, if the descriptor file associated with a media file is updated with a continuous stream of descriptor data, or updated regularly otherwise (e.g., after every frame or two, or after a fixed short time interval such as less than 100 or 250 milliseconds), it is possible to read essentially the whole contents of the media file with a very short latency. In some embodiments, read out latency as low as 2 frames may be possible. It is no longer necessary to wait until the media file's internal descriptor data is updated to reference its newly written media elements.

Figure 8 provides a block diagram that illustrates one example of a system 1000 upon which embodiments of the disclosure may be implemented. Computer system 1000 includes a bus 1002 or other communication mechanism for communicating information, and a hardware processor 1004 coupled with bus 1002 for processing information. Hardware processor 1004 may be, for example, a general-purpose microprocessor, a graphics processing unit, FPGA, ASIC or other type of processing unit, or combinations thereof.

Computer system 1000 also includes a main memory 1006, such as a random-access memory (RAM) or other dynamic storage device, coupled to bus 1002 for storing information and instructions to be executed by processor 1004. Main memory 1006 also may be used for storing temporary variables or other intermediate information during execution of instructions to be executed by processor 1004. Such instructions, when stored in non-transitory storage media accessible to processor 1004, render computer system 1000 into a special-purpose machine that is customised and configured to perform the operations specified in the instructions.

Computer system 1000 may further include a read-only memory (ROM) 1008 or other static storage device coupled to bus 1002 for storing static information and instructions for processor 1004. A storage device 1010, such as an SSD, magnetic disk, optical disk or other storage medium, or array of such media, may be provided and coupled to bus 1002 for storing information and instructions including the media files, descriptor files, and applications as described above.

The computer system 1000 may be coupled via bus 1002 to a display 1012 (such as an LCD, LED, touch screen display, or other display) for displaying information to a computer user, such as the media consumer described and illustrated above. An input device 1014, including alphanumeric and other keys, may be coupled to the bus 1002 for communicating information and command selections to processor 1004. Another type of user input device is cursor control 1016, such as a mouse, a trackball, or cursor direction keys for communicating direction information and command selections to processor 1004 and for controlling cursor movement on display 1012.

According to at least one embodiment, the techniques herein are performed by computer system 1000 in response to processor 1004 executing one or more sequences of one or more instructions contained in main memory 1006. Such instructions may be read into main memory 1006 from another storage medium, such as storage device 1010, 1060 or other system such as a remote database. Execution of the sequences of instructions contained in main memory 1006 causes processor 1004 to perform the process steps described herein. In alternative embodiments, hard-wired circuitry may be used in place of or in combination with software instructions.

Computer system 1000 may also include a communication interface 1018 coupled to bus 1002. Communication interface 1018 provides a two-way data communication coupling to a network link 1020 that is connected to communication network 1050. For example, communication interface 1018 may be an integrated services digital network (ISDN) card, cable modem, satellite modem, etc. As another example, communication interface 1018 may be a local area network (LAN) card to provide a data communication connection to a compatible LAN. Wireless links may also be implemented. In any such implementation, communication interface 1018 sends and receives electrical, electromagnetic, or optical signals that carry digital data streams representing various types of information. In embodiments in which the computer system is (or forms part of) a media processing appliance the communications interface 1018 and consequently network link 1018 may be adapted to operate according to a network protocol specialised for media transmission such as HDMI, SDI or other SMPTE standard.

The computer system 1000 may additionally include (or be connected to) a video card or other media capture and/or playback interface 1022. This media capture and/or playback interface 1022 could include one or more of the Blackmagic Desktop Video products such as a Blackmagic Decklink Card, UltraStudio or the like. It may be integrated into the computer 1000 (e.g., as a video card may be) or standalone hardware unit(s).

The computer system 1000 may additionally be connected to an external storage system 1060, e.g., via the network link 1020 (and optionally network 1050). The external storage system may be an external disk, or array of storage media, network attached storage, SAN or other large scale data storage which may be accessed via a network or communications connection.

The terms "storage media" or "storage medium" as used herein refers to any non-transitory media that stores data and/or instructions that cause a machine to operate in a specific fashion. Such storage media may comprise non-volatile media and/or volatile media. Non-volatile media includes, for example, optical or magnetic disks, such as storage device 1010, and storage devices forming parts of external storage system 1060. Volatile media includes dynamic memory, such as main memory 1006. Common forms of storage media include, for example, a floppy disk, a flexible disk, hard disk, solid state drive, magnetic tape, or any other magnetic data storage medium, flash memory, a CD-ROM, any other optical data storage medium, any physical medium with patterns of holes, a RAM, a PROM, and EPROM, a FLASH-EPROM, NVRAM, any other memory chip or cartridge.

Any definitions expressly provided herein for terms contained in the appended claims shall govern the meaning of those terms as used in the claims. No limitation, element, property, feature, advantage, or attribute that is not expressly recited in a claim should limit the scope of the claim in any way.

As used herein the terms "include" and "comprise" (and variations of those terms, such as "including", "includes", "comprising", "comprises", "comprised" and the like) are intended to be inclusive and are not intended to exclude further features, components, integers, or steps.

For aspects of the disclosure that have been described using flowcharts, a given flowchart step could potentially be performed in various ways and by various devices, systems, or system modules. A given flowchart step could be divided into multiple steps and/or multiple flowchart steps could be combined into a single step unless the contrary is specifically noted as essential. Furthermore, the order of the steps can be changed without departing from the scope of the present disclosure, unless the contrary is specifically noted as essential.

It will be understood that the present invention has been described above purely by way of example, and modifications of detail can be made within the scope of the invention.

Reference numerals appearing in the claims are by way of illustration only and shall have no limiting effect on the scope of the claims.

Various aspects and embodiments of the present invention are defined in the following clauses:
Clause 1. A method of writing a media file, comprising:
   (a) writing a media file including:
      a file header;
      a file body for containing media elements;
      a descriptor portion enabling reading of the media elements in the body portion;
      wherein the file header includes data enabling the location of the file's descriptor portion to be determined;
   (b) writing at least one media element to the file body; and
   (c) writing a descriptor file associated with the media file, said descriptor file containing data enabling reading of media elements stored in the file body of said media file.
Clause 2. A method as in clause 1 which further includes, repeating (b) to write additional media elements to said file body.
Clause 3. A method as in clause 2 which further includes repeating (c) to write additional data into said descriptor file enabling reading of the additional media elements stored in the file body of said media file.
Clause 4. A method of writing a media file, the media file comprising:
   a file header;
   a file body for containing media elements;
   a descriptor portion enabling reading of media elements in the body portion; wherein the file header includes data enabling the location of the file's descriptor portion to be determined;
   the method comprising:
      (a) writing the media file;
      (b) writing at least one media element to the file body;
      (c) writing a descriptor file associated with the media file, said descriptor file containing data enabling reading of media elements stored in the file body of said media file;
      (d) repeating (b) to write additional media elements to said file body; and
      (e) repeating (c) to write additional data into said descriptor file enabling reading of the additional media elements stored in the file body; and
      (f) once all additional media elements are written to said file body, writing a descriptor portion to said media file, enabling reading of media elements in the body portion.
Clause 5. The method of clause 4 which further includes:
   updating the file header to provide an updated indication of a location of the descriptor portion within the file.
Clause 6. A method as in any one of clauses 3 to 5 wherein (c) is repeated after each additional media element is written to said file body.
Clause 7. A method as in any one of clauses 3 to 5 wherein (c) is repeated periodically.
Clause 8. A method as in any one of clauses 3 to 5 wherein (c) is repeated on an ad hoc basis.
Clause 9. A method as in any one of clauses 1 to 3 or 6 to 8 which further includes:
   modifying the descriptor portion of the media file to enable reading of all media elements in the body portion; and
   updating the file header to provide an updated indication of a location of the descriptor portion within the file.
Clause 10. A method as in any one of clauses 3 to 9 wherein when repeating (c) includes writing a said additional data enabling reading in a data new fragment that enables playback of media elements stored in the file body of said media file since the last occurrence of (c).
Clause 11. A method as in any one of the preceding clauses which includes:
   finalising the media file by writing a final descriptor portion in the media file.
Clause 12. The method as in clause 3, 5 or 9 which further includes, deleting the descriptor file.
Clause 13. A method of reading a media file stored on a data storage media, said media file comprising:
   a file header;
   a file body containing media elements; and
   a descriptor portion enabling reading of media elements in the body portion; wherein the file header includes an indication of a location of the descriptor portion within the file; said method including:
      (x) Reading a descriptor file associated with the media file, said descriptor file containing data enabling reading of media elements stored in the file body of said media file; and
      (y) Reading said media elements from said file body according to said descriptor file.
Clause 14. A method of reading a media file stored on a data storage media, said media file comprising:
   a file header;
   a file body containing media elements; and
   a descriptor portion enabling reading of media elements in the body portion; wherein the file header includes an indication of a location of the descriptor portion within the file;
   said method including:
      checking for the presence of a descriptor file associated with the media file, said descriptor file being configured to store data enabling reading of media elements stored in the file body of said media file; and
      in the event said descriptor file exists and includes data enabling reading of media elements:
         (x) reading a descriptor file associated with the media file, said descriptor file containing data enabling reading of media elements stored in the file body of said media file; and
         (y) reading said media elements from said file body according to said descriptor file.
Clause 15. A method as in either of clauses 13 or 14 which further includes, repeating (x) to obtain additional data enabling reading of media elements stored in the file body of said media file.
Clause 16. A method as in clause 15 wherein the data enabling reading is written in the descriptor file in sequentially stored fragments, wherein each fragment enables playback of media elements stored in the file body stored since the previous fragment was stored in the descriptor file.
Clause 17. A method as in clause 16 wherein repeating (x) includes reading one or more fragments that were stored in the descriptor file since (x) was last repeated.
Clause 18. A method as in any one of clauses 15 to 17 which includes detecting a change in the descriptor file, and in response to said detection repeating (x).
Clause 19. A method as in clause 18 wherein detecting a change in the descriptor file comprises any one of:
   receiving a notification indicating that said descriptor file has been changed; or
   checking for a change in said descriptor file.
Clause 20. A method as in any one of clauses 13 to 19 which further includes repeating (y) to read additional media elements from said file body according to said additional data enabling reading.
Clause 21. A method as in any one of clauses 13 to 20 wherein, in the event that either:
   said descriptor file associated with the media file does not exist; or
   said descriptor file associated with the media file does not include data enabling reading of media elements, said method includes:
      (x2) reading the descriptor portion of the media file enabling reading of media elements in the body portion; and
      (y2) reading said media elements from said file body according to said descriptor portion of the media file.
Clause 22. A method of reproducing a media file via a storage medium, said method, comprising:
   (a) writing a media file to the storage medium using a method as in any one of clauses 1 to 12; and
   (b) reading a media file from the storage medium using a method as in any one of clauses 13 to 21.
Clause 23. A method of live recording of media, the media comprising a plurality of media elements of audio, video, or audio and video, the method comprising:
   creating a media file for the media, the media file comprising a file header and a file body;
   during live recording by a media source: a) receiving from the media source at least one media element of the plurality of media elements; b) writing the at least one media element into the file body; and c) writing data enabling reading of the at least one media element to a descriptor file associated with the media file; and
   once all of the plurality of media elements have been received, finalising the media file, including writing or updating a descriptor portion of the media file;
   wherein the file header includes data enabling the location of the descriptor portion of the media file to be determined and the descriptor portion comprises data enabling reading of the media elements in the body portion.
Clause 24. The method of clause 23, wherein the created media file includes a descriptor portion.
Clause 25. The method of clause 23, wherein the created media file does not include a descriptor portion and finalising the media file comprises adding the descriptor portion to the media file.
Clause 26. The method of any one of clauses 23 to 25, including updating the descriptor file at least once a second during the live recording, based on media elements of the plurality of media elements received and written to the file body since the last update.
Clause 27. The method of any one of clauses 23 to 26, further including reading the media file during the live recording or prior to the finalising of the media file, wherein reading the media file comprises reading media elements in the file body according to the descriptor file.
Clause 28. A computer readable medium storing instructions that, when executed by a computer processor, cause the computer processor to perform the method of any one of clauses 1 to 27.

## Claims

1. A method of writing a media file, the media file comprising:
a file header;
a file body for containing media elements;
a descriptor portion enabling reading of media elements in the body portion; wherein the file header includes data enabling the location of the file's descriptor portion to be determined;
the method comprising:
(a) writing the media file;
(b) writing at least one media element to the file body;
(c) writing a descriptor file associated with the media file, said descriptor file containing data enabling reading of media elements stored in the file body of said media file;
(d) repeating (b) to write additional media elements to said file body; and
(e) repeating (c) to write additional data into said descriptor file enabling reading of the additional media elements stored in the file body; and
(f) once all additional media elements are written to said file body, writing a descriptor portion to said media file, enabling reading of media elements in the body portion.

2. The method of claim 1 which further includes:
updating the file header to provide an updated indication of a location of the descriptor portion within the file.

3. A method as claimed in either of claims 1 or 2 wherein (c) is repeated after each additional media element is written to said file body, periodically, on an ad hoc basis.

4. A method as claimed in any one of claims 1 to 3 wherein when repeating (c) includes writing a said additional data enabling reading in a data new fragment that enables playback of media elements stored in the file body of said media file since the last occurrence of (c).

5. A method as claimed in any one of the preceding claims which includes:
finalising the media file by writing a final descriptor portion in the media file; and
deleting the descriptor file.

6. A method of reading a media file stored on a data storage media, said media file comprising:
a file header;
a file body containing media elements; and
a descriptor portion enabling reading of media elements in the body portion; wherein the file header includes an indication of a location of the descriptor portion within the file;
said method including:
checking for the presence of a descriptor file associated with the media file, said descriptor file being configured to store data enabling reading of media elements stored in the file body of said media file; and
in the event said descriptor file exists and includes data enabling reading of media elements:
(x) reading a descriptor file associated with the media file, said descriptor file containing data enabling reading of media elements stored in the file body of said media file; and
(y) reading said media elements from said file body according to said descriptor file.

7. A method as claimed in claim 6 which further includes, repeating (x) to obtain additional data enabling reading of media elements stored in the file body of said media file.

8. A method as claimed in claim 7 wherein the data enabling reading is written in the descriptor file in sequentially stored fragments, wherein each fragment enables playback of media elements stored in the file body stored since the previous fragment was stored in the descriptor file.

9. A method as claimed in claim 8 wherein repeating (x) includes reading one or more fragments that were stored in the descriptor file since (x) was last repeated.

10. A method as claimed in any one of claims 6 to 9 which includes detecting a change in the descriptor file, and in response to said detection repeating (x).

11. A method as claimed in claim 10 wherein detecting a change in the descriptor file comprises any one of:
receiving a notification indicating that said descriptor file has been changed; or
checking for a change in said descriptor file.

12. A method as claimed in any one of claims 6 to 11 which further includes repeating (y) to read additional media elements from said file body according to said additional data enabling reading.

13. A method as claimed in any one of claims 6 to 12 wherein, in the event that either:
said descriptor file associated with the media file does not exist; or
said descriptor file associated with the media file does not include data enabling reading of media elements, said method includes:
(x2) reading the descriptor portion of the media file enabling reading of media elements in the body portion; and
(y2) reading said media elements from said file body according to said descriptor portion of the media file.

14. A method of reproducing a media file via a storage medium, said method, comprising:
(a) writing a media file to the storage medium using a method as claimed in any one of claims 1 to 5; and
(b) reading a media file from the storage medium using a method as claimed in any one of claims 6 to 13.

15. A computer readable medium storing instructions that, when executed by a computer processor, cause the computer processor to perform the method of any one of claims 1 to 14.
